# EUROPEAN PATENT APPLICATION

(11) **EP 1 055 806 A2**
(43) Date of publication of application: **29.11.2000**
(21) Application number: 00304414.6
(22) Date of filing: 24.05.2000
(51) Int. Cl.: F01N 3/08, F01N 3/021, B01D 53/94

(54) **NOx trap and particulate filter system for an internal combustion engine**

(30) Priority: 28.05.1999 US 322299
(71) Applicant: Ford Global Technologies, Inc., Dearborn, Michigan 48126 (US)
(72) Inventor: Hepburn, Jeffrey Scott, Michigan 48009 (US); Hammerle, Robert Henry, Franklin, Michigan 48025 (US)
(74) Representative: Messulam, Alec Moses

(57) **Abstract**

An exhaust gas purification system for an internal combustion engine including two integrated NOₓ trap-particulate filters (19,20) arranged in parallel in the exhaust path. Each of the filters (19,20) is used in the alternative to reduce NOₓ. Thus, one filter can be regenerated while the other is in use. A valve (24,25) is used to direct the flow of exhaust gas to the respective exhaust filters (19,20). A nozzle (29,30) for introducing reducing agents into each of the exhaust filters is provided in the exhaust path (16,18) of each of the respective filters (19,20). An engine control module (34) is also provided for monitoring the levels of absorbed NOₓ and particulate matter in each of the filters (19,20) and generating control signals for the nozzles (29,30) and the valve as a function of the absorbed NOₓ and particulate matter in each filter. In addition, an oxidation catalyst (26,27) is located upstream of each of the respective exhaust filters.

## Description

The present invention relates generally to exhaust systems for vehicles and, more particularly, to a combined NOₓ trap and particulate filter system for diesel engines in automotive vehicles.

A three-way catalyst (TWC) is generally used as a means for removing pollutants from the exhaust gas of an internal combustion engine. TWCs remove CO, HC, and NOₓ (nitrogen oxide) simultaneously from engine exhaust gases when the air-fuel ratio of the exhaust gas is at a stoichiometric air-fuel ratio. The ability of TWC to remove NOₓ in the exhaust gas falls rapidly, however, when the air-fuel ratio of the exhaust gas becomes leaner. Therefore, in engines operating in a lean air-fuel ratio environment, such as lean-burn diesel engines, it is difficult to remove NOₓ from the exhaust gas using a conventional TWC.

In addition, although diesel engines present opportunities for improved fuel economy, diesel engine emission controls present several challenges. In particular, future emission standards are likely to require a lean NOₓ after-treatment which is capable of approximately 90 percent NOₓ efficiency.

One after-treatment technology which may provide the requisite level of NOₓ efficiency is the selective catalytic reduction (SCR) catalyst. The SCR catalyst utilises urea as the reductant for the NOₓ absorbent. One drawback of the SCR catalyst is that the urea must be stored in an onboard reservoir and must be periodically replenished. In addition, since the SCR catalyst cannot effectively oxidise CO and HC, a separate conventional precious metal oxidation catalyst is required to remove these pollutants.

Another NOₓ after-treatment technology which may be capable of providing high NOₓ efficiency, is the NOₓ trap. Application of NOₓ traps to diesel engines, however, also presents certain challenges. In particular, since the air-fuel ratio of the exhaust gas of a diesel engine is always lean, i.e., the concentration of oxygen in the exhaust gas is high, it is difficult to regenerate the NOₓ trap absorbent. (In this specification, the term regeneration refers to the process of causing the release of the absorbed nitrogen from the NOₓ absorbent in the NOₓ trap.) In other words, NOₓ trap regeneration requires a fuel-rich exhaust gas, i.e., a low concentration of oxygen, which is difficult to achieve with a diesel engine. In addition, NOₓ trap performance degrades in the presence of sulphur, and many diesel fuels contain high sulphur levels.

According to the present invention there is provided an exhaust gas purification system for an internal combustion engine in a motor vehicle comprising: first and second exhaust filters, each of said exhaust filters having a plurality of inlets for receiving exhaust gases from said internal combustion engine and a plurality of outlets, said inlets and outlets defined by a substrate disposed within said filter and having a plurality of walls forming a plurality of first and second alternating channels extending longitudinally between said inlets and outlets, and a NOₓ absorbent wash coat disposed on said walls forming said plurality of second alternating channels; first and second exhaust passages connected between said internal combustion engine and said inlets of said respective first and second exhaust filters; at least one valve operatively connected to said respective first and second exhaust passages, said valve responsive to a control signal for metering the flow of exhaust gas to the respective exhaust filters; first and second reducing agent nozzles, each of said nozzles responsive to a nozzle signal for supplying reducing agent to said NOₓ absorbent wash coat of said respective first and second exhaust filters; first and second oxidation catalysts located upstream of said respective first and second exhaust filters and downstream of said respective first and second reducing agent nozzles; and an engine control module for monitoring the levels of absorbed NOₓ and particulate matter in each of said filters and generating said control signal and said nozzle signals as a function of said absorbed levels of NOₓ and particulate matter.

Further according to the present invention there is provided a method of purifying exhaust gases of an internal combustion engine having an exhaust gas purification system comprising a first and second exhaust filters arranged in parallel downstream of said engine, first and second oxidation catalysts located upstream of said respective exhaust filters, at least one control valve for regulating the flow of exhaust through said respective exhaust filters, and first and second reducing agent nozzles for supplying reducing agent to said respective exhaust filters, the method comprising the steps of: positioning said control valve such that all of the exhaust gas is flowing through one of said exhaust filters, thereafter; estimating the total amount of NOₓ stored in said one exhaust filter as a function of the engine speed and engine load; and if the cumulative NOx stored in said one exhaust filter exceeds a predetermined level, then restricting the flow of exhaust gas through said one exhaust filter and directing substantially all of the exhaust flow through said other exhaust filter and activating said respective reducing agent nozzle for said one exhaust filter for a first predetermined period of time.

One advantage of the present invention is that the integrated NOₓ trap and particulate filter provides a more compact and potentially less expensive device to achieve both NOₓ and particulate matter control. Another feature of the present invention is that the NOₓ absorbent of either filter can be readily regenerated.

The invention will now be described further, by way of example, with reference to the accompanying drawings, in which:
FIGURE 1 is a plan view of an exhaust system according to one embodiment of the present invention illustrating its operational relationship with an internal combustion engine;
FIGURE 2 is a schematic diagram of one embodiment of the exhaust filters of the exhaust system of Figure 1;
FIGURES 3a and 3b are logic control diagrams for the NOₓ absorption and regeneration process of the exhaust system of Figure 1; and
FIGURES 4a, 4b, and 4c are logic control diagrams for monitoring and removing particulate matter and sulphate absorbed in the exhaust filters of Figure 1.

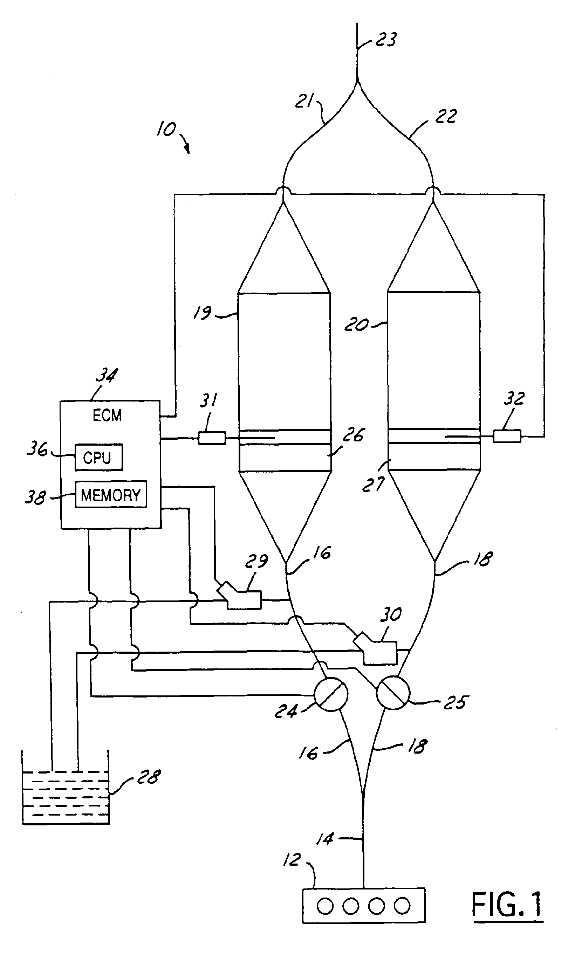

Turning now to Figure 1, an exhaust system 10 according to the present invention is illustrated in operational relationship with an internal combustion engine 12 such as a diesel engine for a vehicle such as an automotive vehicle (not shown). The engine 12 has an exhaust manifold 14 to direct the exhaust gases from the engine 12 to the exhaust system 10. The exhaust manifold 14 is divided into two exhaust intake conduits 16, 18. The exhaust intake conduits 16, 18 direct exhaust gases through two integrated NOₓ trap/particulate filters 19, 20. The outputs of the filters 19, 20 are directed through two exhaust output conduits 21, 22 to the muffler or tail pipe 23. The amount of exhaust gas flowing to each of the filters 19, 20 is governed by control valves 24 and 25. Conventional oxidation catalysts 26 and 27 are located upstream of the filters 19 and 20.

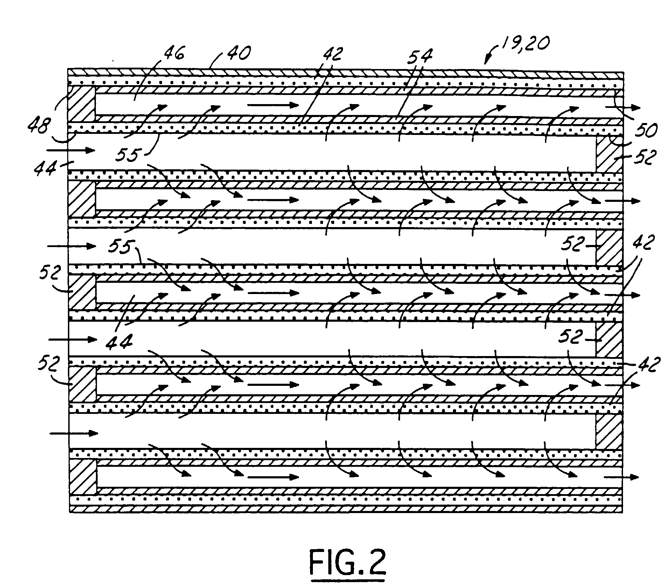

The oxidation catalysts 26, 27 serve several functions. They oxidise the majority of the HC and CO in the exhaust flow. Any remaining CO and HC is then fully oxidised over the platinum contained in the NOₓ absorbent wash coat 54 (Figure 2) of the filters 19, 20. The oxidation catalysts also create a catalytic combustion reaction during regeneration of the NOₓ absorbent and particulate matter burn-off as explained in more detail below.

A reducing agent supply tank 28 and associated fuel nozzles 29, 30 enable precise quantities of reductant to be injected into the exhaust path intake conduits 16, 18. In the case of a diesel engine, the reductant is preferably the diesel fuel supply in the vehicle fuel tank.

In addition, temperature sensors 31, 32 provide feedback to the engine control module (ECM) 34 regarding exothermic reactions in the oxidation catalysts 26, 27. The ECM 34, in turn, controls the flow of exhaust gas through the exhaust system 10 as well as the regeneration process of the filters 19, 20. Logic control of the system 10 is carried out in the ECM 34 by way of a central processing unit (CPU) 36 such as a microprocessor and associated memory 38.

Referring to Figure 2, each of the exhaust filters 19, 20 of Figure 1 include a filter substrate 40 extending longitudinally. The filter substrate 40 has a plurality of walls 42 extending longitudinally and forming a plurality of alternating first and second channels 44 and 46. The walls 42 are made of a ceramic material such as ceramic cordierire. The ceramic material is porous and has a maximum pore size of approximately 60 microns. The walls 42 have a thickness of 20 to 25 mils. The walls 42 are configured to provide 50 to 60 channels per square inch. Channels 44, 46 have a generally rectangular cross-section, although it should be appreciated that the cross-sectional area of the channels 44,46 is dictated by flow and filtering requirements.

Each of the channels 44,46 have an inlet end 48 and an outlet end 50. The first channels 44 have a blocking member 52 to close the outlet end 50 and the second channels 46 have a blocking member 52 to close the inlet end 48. The blocking member 52 is made of ceramic material such as ceramic cordierire. Second channels 46 also have a NOₓ absorbent wash coat 54 extending from the outlet end 50 along the walls 42 toward the inlet end 48. The wash coat 54 is a NOₓ absorbent applied by conventional procedures. The NOₓ absorbent is preferably a precious metal such as Pt-Rh and an alkali metal such as potassium or lithium, or alkaline earth metals such as barium or strontium dispersed into an alumina support deposited onto the walls 42 of the second channels 46.

It should be appreciated that alternate channels 44, 46 are blocked to force all of the exhaust gas flow through the walls 42 having the wash coat 54 thereby filtering the exhaust gas particulate matter and absorbing the NOₓ. Exhaust gases from the engine 12 enter through the inlet openings 48, pass through the porous walls 42 of the substrate 40, and exit through the second channels 46 at the open outlets 50. Since the particulate matter is too large to pass through the pores within the substrate wall 42, it deposits onto the surface 55 of the open channels 44. The NOₓ, HC, and CO pass readily through the substrate wall 42. NOₓ is stored as a nitrate complex while HC and CO are oxidised over the platinum within the NOₓ trap wash coat 54.

Referring to Figures 1 and 2, under the control of the ECM 34, all of the exhaust gas flowing from the engine 12 is directed, for example, to the first exhaust intake conduit 16 and corresponding catalyst 26 and filter 19 by way of the respective valves 24, 25. Thus, control valve 24 is completely open and control valve 25 is completely closed. In this manner, all of the exhaust gases from the engine 12 will flow through the exhaust intake conduit 16, through the oxidation catalyst 26, filter 19, exhaust output conduit 21, and exit the tail pipe 23. The majority of the CO and HC in the exhaust is oxidised over the oxidation catalyst 26, and the remaining CO and HC is oxidised over the platinum contained within the NOₓ trap and particulate filter 19.

When the quantity of absorbed NOₓ in the filter 19 approaches the absorption capacity of the NOₓ trap wash coat 54 of filter 19, the NOₓ regeneration routine for this filter is initiated. At such time, control valve 25 is actuated to its fully opened position, and control valve 24 is set to a partially opened position to restrict the flow of exhaust gas through intake conduit 16. Diesel fuel from the supply 28 is injected by nozzle 29 into the intake conduit 16 and is carried toward filter 19 by the restricted exhaust flow in the conduit 16. Fuel is injected such that the fuel quantity exceeds the stoichiometric amount required to completely react and consume all of the oxygen contained within the exhaust gas flowing through the conduit 16. Catalytic combustion of the injected fuel occurs in the oxidation catalyst 26. Excess fuel is carried downstream into the filter 19 and reacts with the absorbed NOₓ, thereby regenerating the NOₓ trap wash coat 54 within the filter 19.

During the NOₓ trap wash coat regeneration process, a substantial exothermic temperature rise results within the oxidation catalyst 26, but does not substantially propagate into the filter 19. By locating the oxidation catalyst 26 upstream of the filter 19, the exothermic energy release is absorbed within the oxidation catalyst 26, and thermal damage to the NOₓ trap/particulate filter 19 is thereby prevented. The location of the oxidation catalyst 26 provides a further benefit in that high molecular weight hydrocarbons within the diesel fuel are cracked and partially oxidised by the catalyst 26 producing shorter chained hydrocarbons and CO/H₂ which are more effective for NOₓ trap regeneration.

When regeneration of the NOₓ trap wash coat is complete, the diesel fuel injection is discontinued, and the control valve 24 is closed. At such time, all of the exhaust gas created by the engine 12 will be flowing through exhaust intake conduit 18, oxidation catalyst 27, filter 20, output conduit 22, and the tail pipe 23. When the NOₓ trap wash coat 54 and filter 20 become saturated, the above process is repeated for this filter.

At the same time the level of absorbed NOₓ is being monitored in the filters 19, 20, the amount of accumulated particulate matter and accumulated sulphur within the NOₓ trap wash coat is monitored as well. The removal of particulate matter and desulphation processes can be accomplished in a single step. For example, when the accumulation of particulate matter or the build-up of sulphate within the NOₓ trap wash coat of filter 19 exceeds a predetermined level, the control valve 25 is fully opened and the control valve 24 is set to a partially opened position. Diesel fuel from the supply 28 is introduced through the nozzle 29 into the intake conduit 16 and carried towards the filter by the restricted exhaust flow. The amount of diesel fuel injection is determined by the exothermic temperature rise required to initiate oxidation of the soot on the particulate filter 19. The temperature sensor 31 provides a feedback control signal to the ECM 34 to provide the fuel metering control. Once sustained oxidation of the soot on the particulate filter is achieved, the diesel fuel injection is terminated. The Oxidation process, however, continues. The rate of soot oxidation occurring within the particulate filter and the resulting exothermic temperature rise is a function of the oxygen concentration and flow rate of the exhaust gas in the exhaust intake conduit 16. In addition, because the rate of soot oxidation is related to the availability of oxygen, a rich environment is created within the NOₓ trap/particulate filter 19 which allows for desulphation of the NOₓ trap wash coat. Depending upon the level of sulphur poisoning within the filter 19, this desulphation process may be sufficient to regenerate the filter.

Alternatively, a more thorough desulphation procedure can be carried out. During this operation, for example, the control valve 25 is fully opened, and the control valve 24 is partially opened, restricting the flow of exhaust through the intake conduit 16. Diesel fuel from the supply 28 is intermittently injected by the nozzle 29 into the intake conduit 16. The instantaneous rate of diesel fuel injection is such that it reacts with substantially all of the exhaust gas oxygen over the oxidation catalyst 26. This produces periodic rich pulses of exhaust gas which induce the decomposition of the stored sulphate within the NOₓ trap wash coat of filter 19. The frequency and duration of the diesel fuel injection determines the exothermic temperature rise which is generated by the catalytic combustion reaction occurring in the oxidation catalyst 26. The temperature sensor 31 provides a feedback control signal to the ECM 34 for regulating the frequency and duration of the diesel fuel injection.

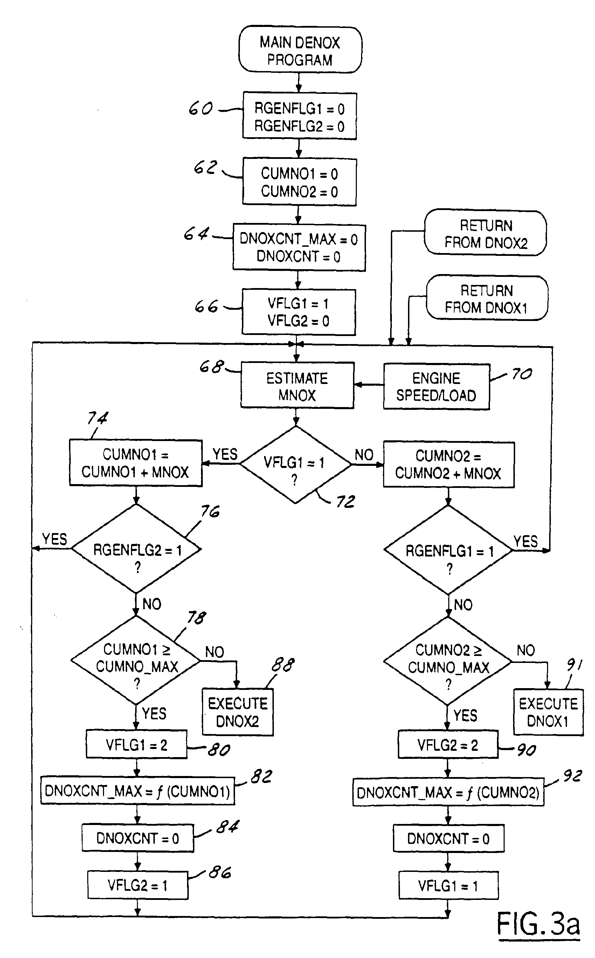

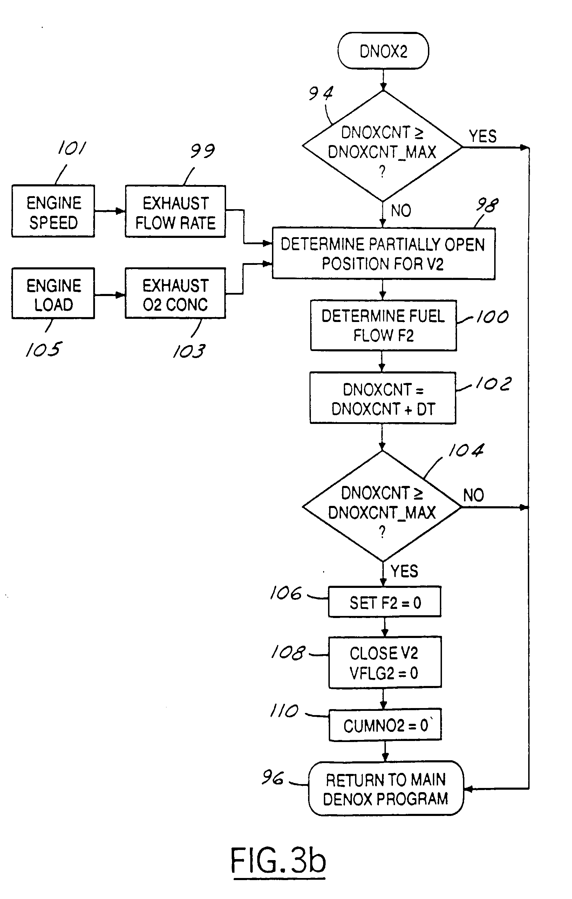

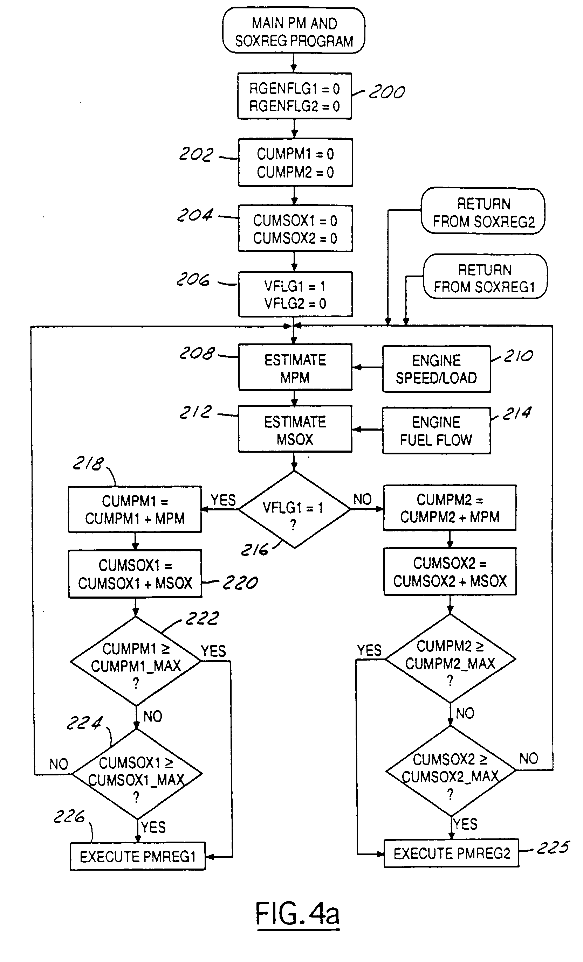

The logic routines executed by the ECM 34 to control the exhaust gas purification system 10 will now be described with reference to Figures 3a, 3b, 4a-4c. Figures 3a and 3b describe a preferred control arrangement for monitoring NOₓ absorption in filters 19, 20 and regeneration of the same. As shown in Figure 3a, the primary NOₓ control scheme begins with a series of initialisations. In these logic control diagrams, the parallel filter arrangement as shown in Figure 1 is considered to have two sides or paths. Thus, logic variables ending in the numeral 1 referred to the exhaust path containing filter 19, for example, and logic variables ending in the numeral 2 referred to the exhaust path containing filter 20. Thus, at the beginning of the routine in block 60, the regeneration flags for both sides are set to zero, indicating that particulate matter (PM) removal and desulphation (SOₓ regeneration) is not taking place in either side. Similarly, the cumulative NOₓ stored in either filter is equal to zero at initialisation as shown in block 62. In block 64, the NOₓ regeneration counter is set to zero and the maximum value for the NOₓ regeneration counter is set to zero. The status of the control valves is initialised in block 66. In this case, the valve in the first path (control valve 24) is fully opened, and the control valve for the second path is completely closed.- (These valve flags can also indicate a partially open position when they have a value of two.) Thus, after initialisation, all of the exhaust gas will be flowing through one side of the exhaust system 10 which, in this example, corresponds to filter 19 of Figure 1.

The mass of feed gas NOₓ generated by the engine is estimated in block 68 as a function of the engine speed and load 70. This value can be readily determined from lookup tables indexed by engine speed and load created during engine mapping. This value is then added to the cumulative NOₓ absorbed by the respective filter through which the exhaust gas is flowing as dictated by decision block 72. Assuming the control valve for the first path is open, this value will be added to the cumulative total NOₓ absorbed by the filter in the first path at block 74. The variable flag indicating whether PM and SOₓ regeneration is occurring for path two is checked in decision block 76. If regeneration and particulate matter burn-off is not occurring in the second path, then the total mass of absorbed NOₓ is compared to a predetermined maximum value for the first filter at decision block 78. If the maximum value is exceeded, the control valve in path one is partially closed, the duration of the NOₓ regeneration for filter one is set as a function of the total NOₓ absorbed, the regeneration timer is reset, and the control valve for the second path is fully opened. Otherwise, the NOₓ regeneration program for the second filter is executed at block 88. The right-hand side of the logic diagram following decision block 72 operates in nearly the same manner as that just described for the filter in path two.

The regeneration routine for the second filter called by logic block 88 will now be described with reference to Figure 3b. At the start of the regeneration routine for the second filter, the control valve in the first path will be fully open (Fig. 3a, block 72) and the control valve in the second valve will be partially open (Fig. 3a, block 90). The length of the regeneration counter will have also been set as a function of the total absorbed NOₓ in the second filter (Fig. 3a, block 92). The regeneration counter is compared to this maximum value in decision block 94 and, if it has timed-out, no further regeneration takes place, and the logic control returns to the main program at block 96. Otherwise, a partially open position for the second valve is determined at block 98. This value is determined by known methods from the exhaust flow rate 99, which is a function of the engine speed 101; and the oxygen concentration in the exhaust 103, which is a function of the engine load 105. Reductant is injected into the exhaust flow to be carried into the filter at block 100 and the regeneration counter is accordingly incremented at block 102. This regeneration process for the second filter continues for a predetermined period of time as dictated by decision block 104. After such time, the fuel flow is turned off 106, the second valve is closed 108, and the cumulative NOₓ absorbed by the second filter is reset 110. Although not shown, the regeneration process for the first filter is carried out in a similar manner from execution block 91 of Figure 3a.

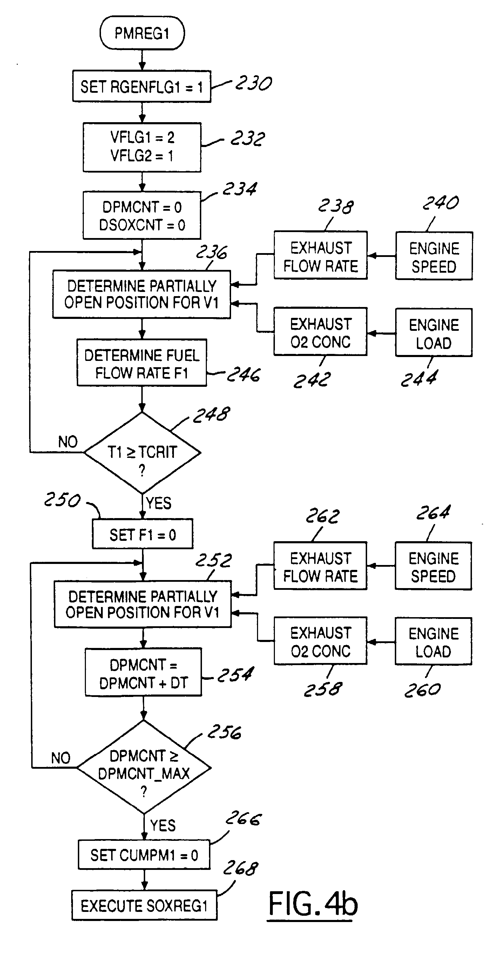

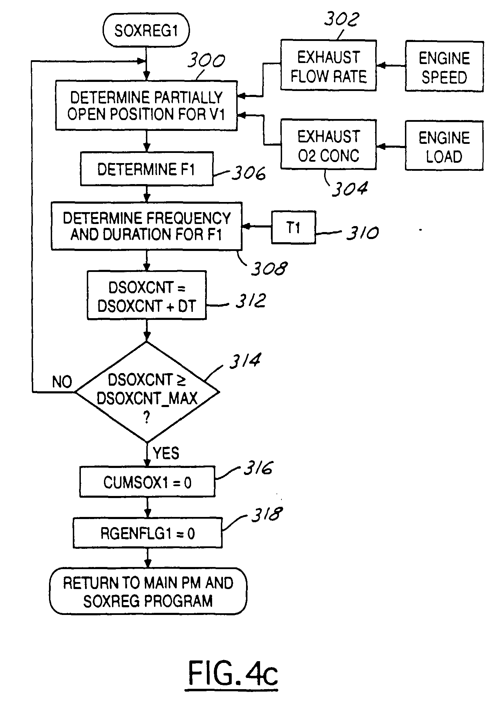

The particulate matter burn-off and SOₓ regeneration logic routine will now be described with reference to Figures 4a, 4b, and 4c. The same convention used in describing the logic variables of Figure 3a and 3b, is applied to the logic variables of Figures 4a-4c. Thus, the variables ending in the numeral 1 referred to the first filter path, i.e., filter 19 of Figure 1, and variables ending in the numeral 2 refer to the second filter path, i.e., filter 20 of Figure 1.

Referring to Figure 4a, at start-up, the regeneration flags are initialised 200, the accumulated particulate matter in both filters is initialised 202, accumulated sulphur in both filters is initialised 204, the first valve is opened and the second valve is closed 206. The mass of particulate matter flowing through the first path is estimated at block 208 as a function of the engine speed and load 210, and the mass of sulphur flowing through side one is estimated at 212, as a function of the engine fuel flow 214. Since all of the exhaust is flowing through the first path 216, these estimated values will be attributed to the first filter at blocks 218 and 220. If either the accumulated total particulate matter in filter 1 as governed by decision block 222, or the total sulphur absorbed by filter 1 as dictated by decision block 224 exceeds a predetermined maximum, the filter will be regenerated at execution block 226.

Figure 4b describes the particulate matter regeneration routine called out by execution block 226 of Figure 4a. As shown in Figure 4b, since filter 1 is being regenerated, a flag is set at block 230, the first valve is partially open at block 232, the second valve is opened fully at block 232, and the counters for particulate matter burn-off and SOₓ regeneration are reset at block 234. The amount of exhaust gas flowing through the first valve is determined at block 236 as a function of the exhaust flow rate 238, which is related to the engine speed 240; and the exhaust oxygen concentration 242, which is related to the engine load 244. Fuel is then injected into the exhaust stream flowing through the first path at block 246. This results in catalytic combustion over the oxidation catalyst in the first path and a corresponding exothermic reaction. The reaction is allowed to continue until the temperature reaches a critical value where sustained oxidation of the particulate matter on the particulate filter is achieved. This is governed by decision block 248. Once sustained oxidation of the soot has been achieved, the fuel flow is cut-off at block 250. The flow of exhaust gas through the first valve is adjusted at block 252, and the oxidation process is allowed to continue for a predetermined period of time as dictated by block 254 and decision block 256. The rate of oxidation is determined by the oxygen concentration 258, which is a function of engine load 260; and the exhaust flow rate 262, which is a function of the engine speed 264. Once the particulate matter has been oxidised for a predetermined period of time, the total particulate matter attributed to the first filter is reset to zero at block 266.

During the particulate matter oxidation, a rich environment is created within the filter which allows for desulphation of the NOₓ trap wash coat. This alone may be sufficient to restore the NOₓ trap performance. Preferably, however, a more extensive desulphation procedure is executed at block 268.

Figure 4c describes the desulphation logic routine with reference to the first filter. Again, the amount of exhaust flowing through the partially opened first valve is determined at block 300 as a function of the exhaust flow rate 302 and exhaust oxygen concentration 304. The fuel flow to be injected in the exhaust path is likewise determined at block 306. The fuel is intermittently injected into the exhaust passage such that it reacts with all of the exhaust gas oxygen over the oxidation catalyst, thereby producing periodic rich pulses of exhaust gas resulting in decomposition of the stored sulphate within the NOₓ trap wash coat of the associated filter. The frequency and duration of the fuel injection determines the exothermic temperature rise generated by the catalytic combustion process over the oxidation catalyst. This is determined at block 308 as a function of the temperature feedback signal received from the temperature sensor 310. The logic counter is incremented at 312, and the process is allowed to continue for a predetermined period of time at decision block 314. Thereafter, the total sulphur attributed in the first filter is rest to zero at block 316, and the regeneration flag is reset at block 318. Although not shown, a similar routine is executed for the particulate matter oxidation and SOₓ regeneration process for the second filter as governed by execution block 225 of Figure 4a.

While the invention has been described, in connection with one or more embodiments, it will be understood that the invention is not limited to these embodiments. For example, although the described embodiment has two control valves 24, 25, a single control valve located at the split of the exhaust manifold 14 could likewise control the exhaust flow in each conduit 16, 18.

## Claims

1. An exhaust gas purification system for an internal combustion engine in a motor vehicle comprising:
first and second exhaust filters (19,20), each of said exhaust filters having a plurality of inlets (48) for receiving exhaust gases from said internal combustion engine and a plurality of outlets (50), said inlets and outlets defined by a substrate (40) disposed within said filter and having a plurality of walls (42) forming a plurality of first and second alternating channels (44,46) extending longitudinally between said inlets and outlets, and a NOₓ absorbent wash coat (54) disposed on said walls forming said plurality of second alternating channels (46) ;
first and second exhaust passages (16,18) connected between said internal combustion engine (12) and said inlets of said respective first and second exhaust filters (19,20);
at least one valve (24,25) operatively connected to said respective first and second exhaust passages (16,18), said valve responsive to a control signal for metering the flow of exhaust gas to the respective exhaust filters (19,20) ;
first and second reducing agent nozzles (29,30), each of said nozzles responsive to a nozzle signal for supplying reducing agent to said NOₓ absorbent wash coat of said respective first and second exhaust filters (19,20);
first and second oxidation catalysts (26,27) located upstream of said respective first and second exhaust filters (19,20) and downstream of said respective first and second reducing agent nozzles (29,30); and
an engine control module (34) for monitoring the levels of absorbed NOₓ and particulate matter in each of said filters (19,20) and generating said control signal and said nozzle signals as a function of said absorbed levels of NOₓ and particulate matter.

2. An exhaust gas purification system as claimed in claim 1, wherein said plurality of walls are porous.

3. An exhaust gas purification system as claimed in claim 1, wherein said plurality of walls are made of ceramic material.

4. An exhaust gas purification system as claimed in claim 1, wherein the number of valves is two.

5. An exhaust gas purification system as claimed in claim 4, wherein each of said valves are located upstream of said respective first and second exhaust filters.

6. An exhaust gas purification system as claimed in claim 1 further comprising first and second temperature sensors each of said temperature sensors operatively connected to said engine control module for providing a respective temperature signal.

7. An exhaust gas purification system as claimed in claim 6, wherein each of said temperature sensors are located between said respective first and second oxidation catalysts and said exhaust filters.

8. A method of purifying exhaust gases of an internal combustion engine having an exhaust gas purification system comprising a first and second exhaust filters arranged in parallel downstream of said engine, first and second oxidation catalysts located upstream of said respective exhaust filters, at least one control valve for regulating the flow of exhaust through said respective exhaust filters, and first and second reducing agent nozzles for supplying reducing agent to said respective exhaust filters, the method comprising the steps of:
positioning said control valve such that all of the exhaust gas is flowing through one of said exhaust filters, thereafter;
estimating the total amount of NOₓ stored in said one exhaust filter as a function of the engine speed and engine load; and
if the cumulative NOx stored in said one exhaust filter exceeds a predetermined level, then restricting the flow of exhaust gas through said one exhaust filter and directing substantially all of the exhaust flow through said other exhaust filter and activating said respective reducing agent nozzle for said one exhaust filter for a first predetermined period of time.

9. A method of purifying exhaust gases as claimed in claim 8 further comprising the steps of:
estimating the total amount of particulate matter stored in said one exhaust filter as a function of the engine speed and load; and
if the cumulative particulate matter stored in said one exhaust filter exceeds a predetermined level, then activating said respective reducing agent nozzle for said one exhaust filter as a function of said one exhaust filter temperature.

10. A method of purifying exhaust gases as claimed in claim 9 further comprising the steps of:
estimating the total amount of sulphur absorbed in said one exhaust filter as a function of the engine fuel flow; and
if the cumulative total sulphur level in said one exhaust filter exceeds a predetermined level, then activating said respective reducing agent nozzle for said one exhaust filter for a third predetermined period of time.
